# EUROPÄISCHE PATENTSCHRIFT

(11) **EP 1 612 379 B1**
(45) Veröffentlichungstag und Bekanntmachung des Hinweises auf die Patenterteilung: **14.10.2009**
(21) Anmeldenummer: 05104274.5
(22) Anmeldetag: 19.05.2005
(51) Int. Cl.: F01N 3/00, F01N 3/04

(54) **Abgasanlage**
Exhaust gas apparatus
Dispositif de gaz d'échappement

(30) Priorität: 02.07.2004 DE 102004032287
(43) Veröffentlichungstag der Anmeldung: 04.01.2006
(73) Patentinhaber: J. Eberspächer GmbH & Co. KG, 73730 Esslingen (DE)
(72) Erfinder: EBERSPACH, Günter, 72649, Wolfschlugen (DE); REBER, Wolfgang, 72663, Grossbettlingen (DE); Buhmann, Rudolf, 73732 Esslingen (DE); Lehnen, Rainer, 70329 Stuttgart (DE)
(74) Vertreter: Bongen, Renaud & Partner

(56) Entgegenhaltungen:
- DE-C1- 19 648 219
- US-A- 4 503 813
- US-A- 5 189 878
- US-A- 5 577 283
- US-A1- 2002 148 221
- US-A1- 2003 221 413

## Beschreibung

Die vorliegende Erfindung betrifft eine Abgasanlage für eine Brennkraftmaschine, insbesondere in einem Kraftfahrzeug, mit den Merkmalen des Oberbegriffs des Anspruchs 1.

Heutige Abgasanlagen bzw. Abgasnachbehandlungssysteme beinhalten auch bei Nutzfahrzeugen vermehrt hygroskopisch wirksame Katalysatorträgermaterialien und/oder Partikelfilter. Diese feinporigen Materialien können sehr viel Wasser speichern, welches beim Kaltstart bis zum Erreichen einer bestimmten Abgastemperatur verstärkt aus dem Material ausgetrieben wird und an der Mündung der Abgasanlage auskondensiert und als sichtbare, unschöne Dampfwolke ins Freie ausgeblasen wird. Insbesondere bei Nutzfahrzeugen mit großvolumigen Abgasanlagen kann dadurch eine unangenehme Sichtbehinderung auftreten, wobei des Phänomen bei winterlichen Umgebungsbedingungen zusätzlich verstärkt wird, da hier die Abgasanlage kalt ist und beim Start der Brennkraftmaschine Wasserdampf im Abgas zunächst beim Durchströmen des kalten Katalysators/Partikelfilters auskondensiert und dort eingelagert wird. Beim Austreiben des Wassers aus dem Katalysator/Partikelfilter wird das dann wasserreiche Abgas am Austritt ins Freie durch die Umgebungsluft besonders stark abgekühlt, so dass insbesondere bei hoher relativer Feuchte in der Umgebungsluft die Wolkenbildung stark ausgeprägt ist.

Aus der US 5,577,383 ist eine Abgasanlage mit einer Abgasreinigungseinrichtung und einer Abgastrocknungseinrichtung bekannt, wobei die genannten Einrichtungen separate Bestandteile der Abgasanlage bilden. Zum Trocknen werden die Abgase dabei unter ihre Taupunkttemperatur abgekühlt.

Aus der JP 01-257710 ist eine Abgasanlage für eine Brennkraftmaschine bekannt, die in einem Abgasstrang zur Ableitung von Verbrennungsabgasen der Verbrennungsmaschine eine erste Abgasleitung und eine zweite Abgasleitung aufweist. In der ersten Abgasleitung ist eine Abgasreinigungseinrichtung angeordnet, während in der zweiten Abgasleitung eine Abgastrocknungseinrichtung angeordnet ist. Ferner ist im Abgasstrang eine Verteilereinrichtung zur Verteilung der Verbrennungsabgase auf die erste bzw. zweite Abgasleitung angeordnet. Die Abgastrocknungseinrichtung ist dabei im Wesentlichen koaxial zur Abreinigungseinrichtung angeordnet und wärmeübertragend mit dieser gekoppelt. Bei der bekannten Abgasanlage arbeitet die Abgastrocknungseinrichtung mit einem Absorbermaterial, um Feuchtigkeit aus dem Abgas herauszuziehen.

Die vorliegende Erfindung beschäftigt sich mit dem Problem, für eine Abgasanlage eingangs erwähnter Art eine verbesserte Ausführungsform anzugeben, mit welcher insbesondere die Bildung von Wasserdampfwolken beim Kaltstart der Brennkraftmaschine reduziert bzw. vermieden werden soll.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung nutzt den allgemeinen Gedanken, die Abgase vor ihrem Austritt in die Umgebung zu trocknen. Hierzu wird vorgeschlagen, bei einer Abgasanlage für eine Brennkraftmaschine, mit einem Abgasstrang zur Ableitung von Verbrennungsabgasen, welcher eine erste und eine zweite Abgasleitung aufweist, in der ersten Abgasleitung eine Abgasreinigungseinrichtung und in der zweiten Abgasleitung eine Abgastrocknungseinrichtung anzuordnen und im Abgasstrang zumindest eine Verteilereinrichtung zur Verteilung der Verbrennungsabgase auf die erste und/oder die zweite Abgasleitung vorzusehen.

Erfindungsgemäß umfasst die Abgastrocknungseinrichtung einen Kondensator, der an einem Kühlkreis angeschlossen ist. Der Kondensator kühlt die Abgase und bewirkt dabei durch ein Unterschreiten des Taupunktes der Verbrennungsabgase ein Kondensieren des in den Verbrennungsabgasen gasförmig gespeicherten Wassers. Da die Abgastrocknungseinrichtung einen Kondensator umfasst, muss für den Fall, dass dieser stromauf der Abgasreinigungseinrichtung angeordnet ist, darauf geachtet werden, dass die Temperatur des getrockneten Abgases noch ausreicht, um die Abgasreinigungseinrichtung zu erwärmen. Dies ist besonders dann wichtig, falls die Abgasreinigungseinrichtung einen Katalysator und/oder ein Partikelfilter umfasst, die ihre reinigende Wirkung erst ab einer bestimmten Mindesttemperatur entfalten.

Dabei werden insbesondere beim Kaltstart der Brennkraftmaschine die zunächst kalten Verbrennungsabgase von der Verteilereinrichtung der zweiten Abgasleitung und damit der Abgastrocknungseinrichtung zugeführt, welche den Verbrennungsabgasen Feuchtigkeit entzieht und die getrockneten Verbrennungsabgase wieder der ersten Abgasleitung zuführt. Durch die Trocknung der Verbrennungsabgase wird beim Austritt in die Umgebungsluft eine Bildung von Dampfwolken reduziert bzw. verhindert, wodurch der optische Eindruck deutlich verbessert und insbesondere bei Fahrzeugen eine Sichtbehinderung des nachfolgenden Verkehrs reduziert werden kann.

Die von der Abgastrocknungseinrichtung getrockneten Verbrennungsabgase können dabei nach Einleiten in die erste Abgasleitung der Abgasreinigungseinrichtung zugeführt werden oder, sofern sie diese bereits vor der Trocknung durchströmt haben direkt ins Freie ausgeblasen werden. Mit zunehmender Laufzeit der Brennkraftmaschine steigt die Temperatur der Verbrennungsabgase an, und zugleich nimmt die beispielsweise in der Abgasreinigungseinrichtung eingelagerte Feuchtigkeit ab, so dass die Trocknung der Abgase zunehmend reduziert werden kann. Dies wird dadurch erreicht, dass die Verteilereinrichtung mit zunehmender Betriebsdauer der Brennkraftmaschine mehr und mehr der Verbrennungsabgase der ersten Abgasleitung zuführt. Die Verteilereinrichtung steuert somit die Aufteilung der Verbrennungsabgase auf die erste und die zweite Abgasleitung bedarfsgerecht, beispielsweise in Abhängigkeit des Betriebszustands der Brennkraftmaschine, wobei die Summe der der ersten und zweiten Abgasleitung zugeführten Verbrennungsabgase stets 100% ist. Die Aufteilung der Verbrennungsabgase auf die erste und die zweite Abgasleitung kann dabei beliebig erfolgen, so dass beispielsweise die erste Abgasleitung vollständig gesperrt ist und der zweiten Abgasleitung 100% der Verbrennungsabgase zugeführt werden, oder umgekehrt oder eine anteilige Aufteilung der Verbrennungsabgase auf die erste und die zweite Abgasleitung erfolgt, wobei die Summe der Anteile der der ersten und der zweiten Abgasleitung zugeführten Verbrennungsabgase 100% der gesamten Verbrennungsabgase ergibt.

Vorteilhafter Weise kann die zweite Abgasleitung stromauf oder stromab der Abgasreinigungseinrichtung in die erste Abgasleitung münden. Dies bietet den Vorteil, die erfindungsgemäße Abgasanlage auf spezielle, beispielsweise fahrzeugindividuelle Anforderungen anzupassen, wodurch sich ein Einsatzgebiet der Erfindung vergrößert und konstruktive Besonderheiten, beispielsweise einzelner Fahrzeugbaureihen, individuell berücksichtigt werden können. Insbesondere für den Fall, dass die zweite Abgasleitung stromab der Abgasreinigungseinrichtung in die erste Abgasleitung mündet kann auf eine Regulierung der Temperatur der die Abgastrocknungseinrichtung verlassenden Verbrennungsabgase verzichtet werden, da diese direkt der ersten Abgasleitung und von dort direkt ins Freie ausgeblasen werden und dadurch auch eine zum Betrieb der Abgasreinigungseinrichtung erforderliche Mindesttemperatur unterschreiten dürfen, was die Erfindung konstruktiv vereinfacht.

Zweckmäßig weist die Abgastrocknungseinrichtung einen Zyklonabscheider auf. Zyklonabscheider dienen der Abscheidung von Kondensat aus dem sie durchströmenden Wasserdampfgemisch. Dazu versetzt ein so genannter Drallgeber die einströmenden Verbrennungsabgase in eine rotierende Bewegung. Durch die auftretenden Fliehkraft werden Flüssigkeiten und Feststoffpartikel an eine Abscheiderwand geschleudert, koalieren dort zu größeren Tropfen, die dann in einen Kondensatsammelraum abfließen. Im günstigsten Fall enthalten die austretenden Verbrennungsabgase kein Kondensat mehr. Zyklonabscheider sind langjährig erprobte und zuverlässige Trocknungseinrichtungen, wodurch eine hohe Qualität der Abgastrocknungseinrichtung erreicht werden kann.

Bei einer vorteilhaften Weiterbildung der erfindungsgemäßen Lösung ist die Verteilereinrichtung so ausgebildet, dass die Verbrennungsabgase in Abhängigkeit eines Kennfeldes der ersten und/oder der zweiten Abgasleitung zuführt. Vorzugsweise berücksichtigt das Kennfeld dabei zumindest einen der nachfolgenden Parameter: Kühlmitteltemperatur eines Kühlkreises, Außentemperatur und/oder Laufzeit der Brennkraftmaschine.
Hierdurch kann erreicht werden, dass die Verteilereinrichtung die Verbrennungsabgase in einem optimalen Verhältnis der ersten und/oder der zweiten Abgasleitung zuführt und dadurch die Bildung von Dampfwolken, insbesondere beim Kaltstart der Brennkraftmaschine, bestmöglichst minimiert bzw. verhindert. Gleichzeitig ist die Erfassung der Parameter für das Kennfeld durch einfache Sensoren bzw. Messwerterfasser möglich, so dass die Steuerung der Verteilereinrichtung konstruktiv einfach und kostengünstig realisiert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung bzw. das Verständnis der Erfindung erleichternde Beispiele sind in den Zeichnungen dargestellt und werden in der nachfolgenden Beschreibung näher erläutert.

Dabei zeigen jeweils schematisch,
- Fig. 1: eine nicht unter den Schutz der Ansprüche fallende Abgasanlage mit einer stromauf einer Abgasreinigungseinrichtung angeordneten Abgastrocknungseinrichtung,
- Fig. 2: eine weitere, nicht unter den Schutz der Ansprüche fallende Abgasanlage wie in Fig. 1, jedoch mit einer stromab der Abgasreinigungseinrichtung angeordneten Abgastrocknungseinrichtung,
- Fig. 3: eine erfindungsgemäße Abgasanlage mit einer Abgasreinigungseinrichtung, welche in eine Abgastrocknungseinrichtung integriert ist.

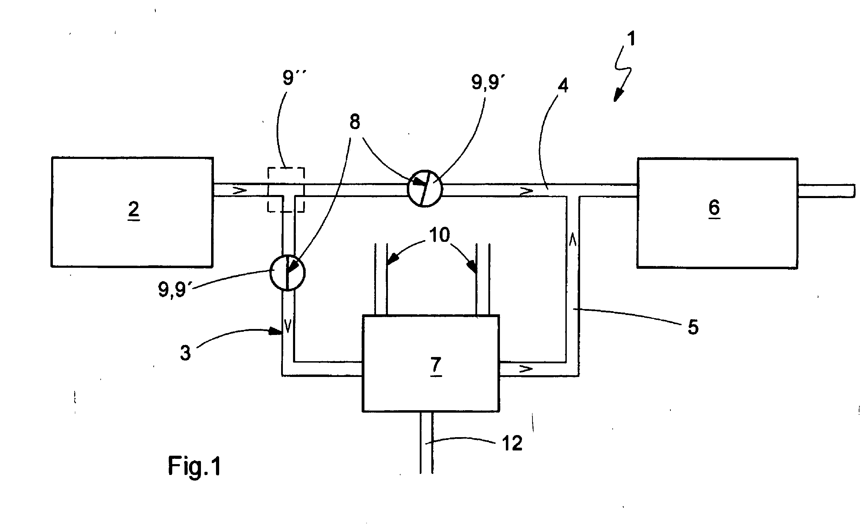

Entsprechend Fig. 1 weist eine Abgasanlage 1 für eine Brennkraftmaschine 2, insbesondere in einem Kraftfahrzeug, einen Abgasstrang 3 zur Ableitung von Verbrennungsabgasen der Brennkraftmaschine 2 auf. Der Abgasstrang 3 besitzt eine erste Abgasleitung 4 und eine zweite Abgasleitung 5, wobei in der ersten Abgasleitung 4 eine Abgasreinigungseinrichtung 6 und in der zweiten Abgasleitung 5 eine Abgastrocknungseinrichtung 7 angeordnet sind. Die Abgasreinigungseinrichtung 6 kann dabei beispielsweise einen Katalysator und/oder ein Partikelfilter umfassen, wogegen die Abgastrocknungseinrichtung 7 z.B. einen Kondensator und/oder ein dehydrierend wirkendes und regenerierbares Absorbermaterial umfassen kann.

Bei den in den Fig. 1 bis 3 gezeigten Ausführungsformen ist die Abgastrocknungseinrichtung 7 jeweils als Kondensator ausgestaltet, der dabei an einen Kühlkreis 10 angeschlossen ist. Alternativ oder zusätzlich zum Kondensator kann ein dehydrierend wirkendes und regenerierbares Absorbermaterial, beispielsweise in Form eines Zeolithbettes, angeordnet sein. Ist die Abgastrocknungseinrichtung 7 als Kondensator ausgebildet, wird das anfallende Kondensat über einen Kondensatablauf 12 ausgeschieden, welcher vorzugsweise zusätzlich schallgedämpft ist. Alternativ oder zusätzlich kann die Abgastrocknungseinrichtung 7 auch einen Zyklonabscheider aufweisen, welcher ein ankommendes Flüssigkeits-Gas-Gemisch mittels Zentrifugalkraft trennt und dadurch ein Abscheiden von Feuchtigkeit eine Trocknung der Verbrennungsabgase bewirkt. Das abgeschiedene Wasser kann dabei über einen dem Kondensatablauf 12 ähnlichen Ablauf abgeführt werden.

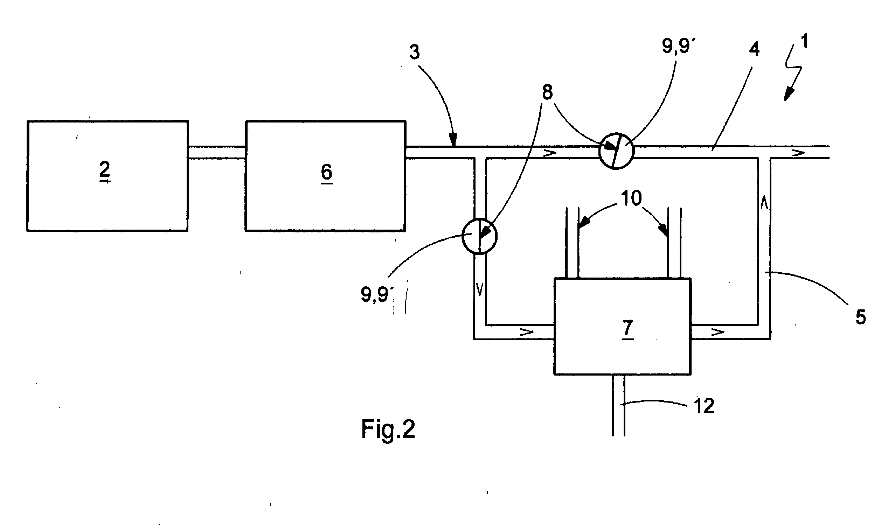

Umfasst die Abgastrocknungseinrichtung 7 einen Kondensator, so kann dieser wie in den Fig. 1 und 2 dargestellt in zumindest einen der nachfolgenden Kühlkreise eingebunden sein: Kühlwasserkreis der Brennkraftmaschine 2, Motoröl-Kühlkreis, Getriebeöl-Kühlkreis, Luft-Kühlkreis, Kühlkreis einer Klimaanlage.

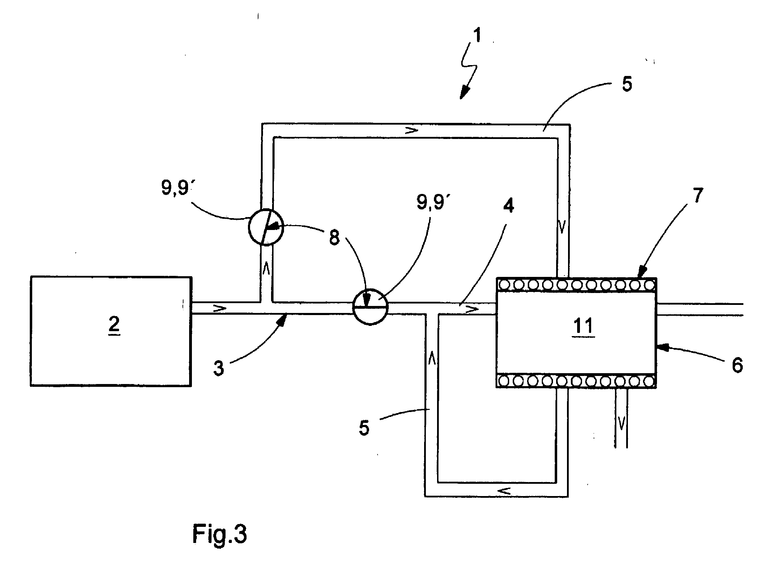

Bei der in Fig. 3 gezeigten Anordnung kann die Kühlung der Abgastrocknungseinrichtung 7 zumindest zum Teil beispielsweise durch Umgebungsluft bewirkt werden, so dass theoretisch ein Anschluss an den Kühlkreis 10 nicht erforderlich ist. Bei der erfindungsgemäßen Bauform ist der Kondensator bzw. die Abgastrockungseinrichtung 7 jedoch stets an einen solchen Kühlkreis 10 angeschlossen. Gleichzeitig bietet die gemäß Fig. 3 gezeigte Variante den Vorteil, dass die die Abgastrocknungseinrichtung 7 durchströmenden Verbrennungsabgase einen Filterkörper 11, beispielsweise einen Monolithen, der Abgasreinigungseinrichtung 6 umströmen und dadurch diesen aufwärmen.

Gemäß Fig. 1 ist die Abgastrocknungseinrichtung 7 stromab der Brennkraftmaschine 2 und stromauf der Abgasreinigungseinrichtung 6 angeordnet, wobei auch denkbar ist, dass die Abgastrocknungseinrichtung 7 gemäß Fig. 2 stromab der Abgaseinrichtung 6 angeordnet ist. Die gemäß Fig. 2 gezeigte Variante bietet dabei den Vorteil, dass die Verbrennungsabgase erst nach der Abgasreinigungseinrichtung 6 getrocknet bzw. gekühlt werden und dadurch eine schnellere Erwärmung der Abgasreinigungseinrichtung 6 auf deren Betriebstemperatur erreicht wird.

Des Weiteren ist gemäß den Fig. 1 bis 3 im Abgasstrang 3 zumindest eine Verteilereinrichtung 8 zur Verteilung der Verbrennungsabgase auf die erste Abgasleitung 4 und/oder die zweite Abgasleitung 5 angeordnet. Die Verteilereinrichtung 8 kann dabei in jeder Abgasleitung 4, 5 je ein Sperrventil 9 oder eine Klappe 9' aufweisen. Alternativ ist auch denkbar, dass die Verteilereinrichtung 8, wie in Fig. 1 mit einer unterbrochen gezeichneter Linie dargestellt, ein Drei-Wege-Ventil 9" aufweist, an welches eingangsseitig oder ausgangsseitig, hier ausgangsseitig, die beiden Abgasleitungen 4, 5 angeschlossen sind.

Generell kann vorgesehen sein, dass die zweite Abgasleitung 5 stromauf (vgl. Fig. 1 und 3) oder stromab (vgl. Fig. 2) der Abgasreinigungseinrichtung 6 in die erste Abgasleitung 4 mündet. Für den Fall, dass die zweite Abgasleitung 5, wie in Fig. 1 und 3 dargestellt, stromauf der Abgasreinigungseinrichtung 6 in die erste Abgasleitung 4 mündet, ist eine nicht dargestellte Regler-/Steuereinrichtung vorgesehen, welche die Verteilereinrichtung 8 und/oder die Abgastrocknungseinrichtung 7 derart regelt/steuert, dass eine für den Betrieb der Abgasreinigungseinrichtung 6 erforderliche Mindesttemperatur der Abgase gewährleistet ist. Ist die Temperatur der aus der Abgastrocknungseinrichtung 7 austretenden Verbrennungsabgase zu gering, so müsste die stromab gelegene Abgasreinigungseinrichtung 6 entweder durch zusätzliche Wärmequellen erwärmt werden (z.B. Abgas eines Stand- oder Zuheizers) oder es muss der Abgasreinigungseinrichtung 6 auch auf direktem Wege, d.h. über die erste Abgasleitung 4 Abgas zugeführt werden, um die Erwärmung der Abgasreinigungseinrichtung 6 zu beschleunigen und dadurch mitzuhelfen diese möglichst schnell auf die erforderliche Betriebstemperatur zu erwärmen. Eine Erfassung der Temperatur der aus der Abgastrocknungseinrichtung 7 austretenden Verbrennungsabgase kann dabei beispielsweise über nicht dargestellte Temperatursensoren erfolgen.

Um die Verbrennungsabgase bedarfsgerecht zwischen der ersten Abgasleitung 4 und der zweiten Abgasleitung 5 aufzuteilen und damit eine Dampfwolkenbildung möglichst stark zu reduzieren bzw. zu verhindern, kann die Verteilereinrichtung 8 so ausgebildet sein, dass sie die Verbrennungsabgase in Abhängigkeit eines Kennfelds der ersten Abgasleitung 4 und/oder der zweiten Abgasleitung 5 zuführt. Dabei ist denkbar, dass das Kennfeld zumindest einen der nachfolgenden Parameter berücksichtigt: Kühlmitteltemperatur eines Kühlkreises, Außentemperatur und Laufzeit der Brennkraftmaschine 2.

Um eine Einlagerung von Feuchtigkeit aufgrund von Kondensationseffekten nach Abstellen des Motors zu minimieren, kann darüber hinaus eine nicht dargestellte Druckquelle und/oder ein Druckspeicher vorgesehen sein, welcher kondensiertes Wasser aus der Abgastrocknungseinrichtung 7 und/oder wasserdampfhaltige Abgase aus der Abgasreinigungseinrichtung 6 ausbläst.

Im Folgenden soll kurz die Wirkungsweise der erfindungsgemäße Abgasanlage 1 erläutert werden:

Insbesondere beim Kaltstart von Brennkraftmaschinen 2 kommt es durch die wasserspeichernde Wirkung von hygroskopisch wirksamen Katalysatorträgermaterialien und/oder Partikelfiltern oftmals zu einem Ausstoß von sichtbaren und unschönen Dampfwolken. Die Dampfwolkenbildung bleibt dabei bis zum Erreichen einer bestimmten Abgastemperatur erhalten, wobei unterhalb dieser Abgastemperatur in einem bestimmten Temperaturfenster verstärkt Wasserdampf aus der Abgasreinigungseinrichtung 6 ausgetrieben wird und an der Mündung der Abgasanlage 1 ins Freie auskondensiert. Verstärkt wird dieses Phänomen bei winterlichen Umgebungsbedingungen, da hier die Abgasanlage 1 kalt ist und beim Start der Brennkraftmaschine 2 Wasser im Abgas zunächst beim Durchströmen der kalten Abgasreinigungseinrichtung 6 auskondensiert und dort eingelagert wird. Beim Austreiben nach Erreichen einer bestimmten Mindesttemperatur wird das dann besonders wasserreiche Abgas am Austritt durch die Umgebungsluft besonders stark abgekühlt, so dass insbesondere bei hoher relativer Feuchte die Dampfwolkenbildung stark ausgeprägt ist.

Um die genannten optischen Beeinträchtigungen zu reduzieren bzw. zu vermeiden, schlägt die erfindungsgemäße Lösung vor, insbesondere beim Kaltstart der Brennkraftmaschine 2, die Verbrennungsabgase vor Austritt aus der Abgasanlage 1 zu trocknen. Dies wird beispielsweise dadurch erreicht, dass die Verbrennungsabgase einer Abgastrocknungseinrichtung 7, welche beispielsweise einen Kondensator und/oder ein dehydrierend wirkendes und regenerierbares Absorbermaterial umfasst, zugeführt und dort getrocknet werden. Die Abgastrocknungseinrichtung 7 ist dazu in einer zweiten Abgasleitung 5 angeordnet, welche über eine Verteilereinrichtung 8 mit Verbrennungsabgasen versorgt werden kann. Die Verteilereinrichtung 8 regelt dabei die Verteilung der Verbrennungsabgase auf die erste Abgasleitung 4 und/oder die zweite Abgasleitung 5. In der ersten Abgasleitung 4 sind dabei die Brennkraftmaschine 2 und die Abgasreinigungseinrichtung 6 angeordnet und direkt miteinander verbunden.

Bei Kaltstart der Brennkraftmaschine führt die Verteilereinrichtung 8 vermehrt Verbrennungsabgase der zweiten Abgasleitung 5 und damit der Abgastrocknungseinrichtung 7 zu, wodurch diese getrocknet werden. Die Trocknung bewirkt, dass die Verbrennungsabgase beim Verlassen der Abgasanlage 1 deutlich weniger Feuchtigkeit aufweisen und dadurch die Dampfwolkenbildung zumindest stark reduziert ist. Generell kann dabei die Verteilereinrichtung 8 über ein Kennfeld gesteuert werden, welches spezifische Parameter, wie beispielsweise Abgastemperatur und Umgebungslufttemperatur, berücksichtig.

Mit zunehmender Temperatur der Verbrennungsabgase bzw. Laufzeit der Brennkraftmaschine 2 vermindert die Verteilereinrichtung 8 den Zustrom von Verbrennungsabgasen in die zweite Abgasleitung 5 und erhöht den Zustrom von Verbrennungsabgasen in die erste Abgasleitung 4. Bei warmer Brennkraftmaschine 2 ist denkbar, dass die zweite Abgasleitung 5 über die Verteilereinrichtung 8 komplett gesperrt ist und 100% der Verbrennungsabgase über die erste Abgasleitung 4 strömen.

Ein ähnliches Prinzip ist gemäß Fig. 3 dargestellt, wobei hier in der Kaltstartphase die Verbrennungsabgase vorzugsweise vermehrt über die zweite Abgasleitung 5 der Abgastrocknungseinrichtung 7 zugeführt werden, welche mantelartig die Abgasreinigungseinrichtung 6 umschließt. Die Kühlung der Abgastrocknungseinrichtung 7 erfolgt erfindungsgemäß durch den hier nicht dargestellten Kühlkreis 10. Nach dem Verlassen der Abgastrocknungseinrichtung 7 werden die Verbrennungsabgase stromauf der Abgasreinigungseinrichtung 6 der ersten Abgasleitung 4 wieder zugeführt und durchströmen dieselbe. Durch eine wärmeübertragende Kopplung zwischen der Abgasreinigungseinrichtung 6 und der Abgastrocknungseinrichtung 7 können die Verbrennungsabgase gemäß der Variante in Fig. 3 während dem Trocknen zur Erwärmung der Abgasreinigungseinrichtung 6 genutzt werden.

Auch bei der in Fig. 3 gezeigten Variante wird mit zunehmender Laufzeit der Brennkraftmaschine 2, d.h. mit zunehmender Temperatur der Verbrennungsabgase, der Zustrom zur zweiten Abgasleitung 5 reduziert bzw. gesperrt und der Zustrom zur ersten Abgasleitung 4 erhöht, bis beispielsweise der komplette Abgasstrom durch die erste Abgasleitung 4 strömt. Die nun heißen Verbrennungsabgase trocknen aufgrund der wärmeübertragenden Kopplung zwischen der Abgasreinigungseinrichtung 6 und der Abgastrocknungseinrichtung 7 das dehydrierend wirkende Absorbermaterial der Abgastrocknungseinrichtung 7 und regenerieren es somit.

Dabei ist bei allen Varianten denkbar, dass beim Kaltstart der Brennkraftmaschine 2 die erste Abgasleitung 4 vollständig gesperrt und die zweite Abgasleitung 5 vollständig geöffnet ist, wogegen beim weiteren Betrieb der Zustrom zur ersten Abgasleitung 4 stetig erhöht und der Zustrom zur zweiten Abgasleitung 5 stetig erniedrigt wird, bis die zweite Abgasleitung 5 komplett gesperrt ist und der Abgasstrom vollständig durch die erste Abgasleitung 4 strömt. Vorzugsweise steuert dabei die Verteilereinrichtung 8 die Aufteilung der Verbrennungsabgase auf die beiden Abgasleitungen 4, 5 bedarfsgerecht, d.h. beispielsweise in Abhängigkeit eines Betriebszustands der Brennkraftmaschine 2 und/oder Umgebungslufttemperatur und/oder Temperatur der Abgase.

## Patentansprüche

1. Abgasanlage (1) für eine Brennkraftmaschine (2), insbesondere in einem Kraftfahrzeug,
- mit einem Abgasstrang (3) zur Ableitung von Verbrennungsabgasen der Brennkraftmaschine (2), der eine erste Abgasleitung (4) und eine zweite Abgasleitung (5) aufweist,
- wobei in der ersten Abgasleitung (4) eine Abgasreinigungseinrichtung (6) angeordnet ist,
- wobei in der zweiten Abgasleitung (5) eine Abgastrocknungseinrichtung (7) angeordnet ist, wobei die Abgastrocknungseinrichtung (7) einen Kondensator umfasst,
- wobei im Abgasstrang (3) zumindest eine Verteilereinrichtung (8) zur Verteilung der Verbrennungsabgase auf die erste und/oder die zweite Abgasleitung (4, 5) angeordnet ist, **dadurch gekennzeichnet**
- **dass** die Abgastrocknungseinrichtung (7) im wesentlichen koaxial zur Abgasreinigungseinrichtung (6) angeordnet und wärmeübertragend mit dieser gekoppelt ist,
- **dass** die Abgastrocknungseinrichtung (7) an einen Kühlkreis (10) angeschlossen ist.

2. Abgasanlage nach dem Oberbegriff des Anspruchs 1,
**dadurch gekennzeichnet,**
**dass** ein Kondensatablauf (12) eines Kondensators der Abgastrocknungseinrichtung (7) schallgedämpft ist.

3. Abgasanlage nach Anspruch 1 oder 2,
**dadurch gekennzeichnet,**
**dass** die Abgastrocknungseinrichtung (7) ein dehydrierend wirkendes und regenerierbares Absorbermaterial umfasst.

4. Abgasanlage nach einem der Ansprüche 1 bis 3,
**dadurch gekennzeichnet,**
**dass** die Abgasreinigungseinrichtung (6) einen Katalysator und/oder ein Partikelfilter umfasst.

5. Abgasanlage nach einem der Ansprüche 1 bis 4,
**dadurch gekennzeichnet,**
- **dass** die Verteilereinrichtung (8) in jeder Abgasleitung (4, 5) je ein Sperrventil (9) oder eine Klappe (9') aufweist, oder
- **dass** die Verteilereinrichtung (8) ein 3-Wege-Ventil (9") aufweist, an welches eingangseitig oder ausgangsseitig die beiden Abgasleitungen (4, 5) angeschlossen sind.

6. Abgasanlage nach einem der Ansprüche 1 bis 5,
**dadurch gekennzeichnet,**
**dass** die zweite Abgasleitung (5) stromauf oder stromab der Abgasreinigungseinrichtung (6) in die erste Abgasleitung (4) mündet.

7. Abgasanlage nach Anspruch 6,
**dadurch gekennzeichnet,**
**dass** für den Fall, dass die zweite Abgasleitung (5) stromauf der Abgasreinigungseinrichtung (6) in die erste Abgasleitung (4) mündet, eine Regler-/Steuereinrichtung vorgesehen ist, welche die Verteilereinrichtung (8) und/oder die Abgastrocknungseinrichtung (7) derart regelt/steuert, dass eine für den Betrieb der Abgasreinigungseinrichtung (6) erforderliche Mindesttemperatur der Verbrennungsabgase gewährleistet ist.

8. Abgasanlage nach einem der Ansprüche 1 bis 7,
**dadurch gekennzeichnet,**
**dass** im Abgasstrang (3) zumindest ein Temperatursensor zur Erfassung der Abgastemperatur angeordnet ist.

9. Abgasanlage nach einem der Ansprüche 1 bis 8,
**dadurch gekennzeichnet,**
**dass** die Abgastrocknungseinrichtung (7) einen Zyklonabscheider aufweist.

10. Abgasanlage nach einem der Ansprüche 1 bis 9,
**dadurch gekennzeichnet,**
**dass** der Kühlkreis (10) der Abgastrocknungseinrichtung (7) in zumindest einen der nachfolgenden Kühlkreise eingebunden ist: Kühlwasserkreis der Brennkraftmaschine (2), Motoröl-Kühlkreis, Getriebeöl-Kühlkreis, Luft-Kühlkreis, Kühlkreis einer Klimaanlage.

11. Abgasanlage nach einem der Ansprüche 1 bis 10,
**dadurch gekennzeichnet,**
**dass** die Verteilereinrichtung (8) so ausgebildet ist, dass sie die Verbrennungsabgase in Abhängigkeit eines Kennfeldes der ersten Abgasleitung (4) und/oder der zweiten Abgasleitung (5) zuführt.

12. Abgasanlage nach Anspruch 11,
**dadurch gekennzeichnet,**
**dass** das Kennfeld zumindest einen der nachfolgenden Parameter berücksichtigt: Kühlmitteltemperatur eines Kühlkreises (10), Außentemperatur und Laufzeit der Brennkraftmaschine (2).

13. Abgasanlage nach einem der Ansprüche 1 bis 12,
**dadurch gekennzeichnet,**
**dass** im Abgasstrang (3) zumindest eine Druckquelle und/oder ein Druckspeicher zum Ausblasen des kondensierten Wassers aus der Abgastrocknungseinrichtung (7) und/oder zum Ausblasen von wasserdampfhaltigen Verbrennungsabgasen aus der Abgasreinigungseinrichtung (6) vorgesehen ist.

## Claims

1. An exhaust system (1) for an internal combustion engine (2), more preferably in a motor vehicle,
- with an exhaust gas train (3) for discharging combustion exhaust gases of the internal combustion engine (2) comprising a first exhaust gas line (4) and a second exhaust gas line (5),
- wherein in the first exhaust gas line (4) an exhaust gas cleaning device (6) is arranged,
- wherein in the second exhaust gas line (5) an exhaust gas drying device (7) is arranged,
- wherein the exhaust gas drying device (7) comprises a condenser
- wherein in the exhaust gas train (3) at least one distribution device (8) for the distribution of the combustion exhaust gases over the first and/or the second exhaust gas line (4, 5) is arranged, **characterized**
- **in that** the exhaust gas drying device (7) is substantially arranged co-axially to the exhaust gas cleaning device (6) and is coupled with said exhaust gas cleaning device in a heat transmitting manner,
- **in that** the exhaust gas drying device (7) is connected to a cooling circuit (10).

2. The exhaust system according to the preamble of Claim 1, **characterized in that** a condensate drain (12) of a condenser of the exhaust gas drying device (7) is sound-dampened.

3. The exhaust system according to Claim 1 or 2,
**characterized in that** the exhaust gas drying device (7) comprises a regenerable absorber material that has a dehydrating effect.

4. The exhaust system according to any one of the Claims 1 to 3, **characterized in that** the exhaust gas-cleaning device (6) comprises a catalytic converter and/or a particle filter.

5. The exhaust system according to any one of the Claims 1 to 4, **characterized**
- **in that** the distribution device (8) in each exhaust gas line (4, 5) comprises a shut-off valve (9) or a flap (9') each, or
- **in that** the distribution device (8) comprises a three-way valve (9") on which on the inlet side or outlet side the two exhaust gas lines (4, 5) are connected.

6. The exhaust system according to any one of the Claims 1 to 5, **characterized in that** the second exhaust gas line (5) terminates in the first exhaust gas line (4) upstream or downstream of the exhaust gas cleaning device (6).

7. The exhaust system according to Claim 6, **characterized in that** in the event that the second exhaust line (5) terminates in the first exhaust gas line (4) upstream of the exhaust gas cleaning device (6) a regulator/control device is provided which regulates/controls the distribution device (8) and/or the exhaust gas drying device (7) in such a manner that a minimum temperature of the combustion exhaust gases required for the operation of the exhaust gas cleaning device (6) is guaranteed.

8. The exhaust system according to any one of the Claims 1 to 7, **characterized in that** in the exhaust gas train (3) at least one temperature sensor for sensing the exhaust gas temperature is arranged.

9. The exhaust system according to any one of the Claims 1 to 8, **characterized in that** the exhaust gas drying device (7) comprises a cyclone separator.

10. The exhaust system according to anyone of the Claims 1 to 9, **characterized in that** the cooling circuit (10) of the exhaust gas drying device (7) is incorporated in at least one of the following cooling circuits: cooling water circuit of the internal combustion engine (2), engine oil cooling circuit, gear oil cooling circuit, air cooling circuit, cooling circuit of an air-conditioning system.

11. The exhaust system according to any one of the Claims 1 to 10, **characterized in that** the distribution device (8) is designed so that it feeds the combustion exhaust gases to the first exhaust gas line (4) and/or to the second exhaust gas line (5) as a function of engine characteristics.

12. The exhaust system according to Claim 11,
**characterized in that** the engine characteristics take into account at least one of the following parameters: coolant temperature of a cooling circuit (10), outside temperature and run time of the internal combustion engine (2).

13. The exhaust system according to any one of the Claims 1 to 12, **characterized in that** in the exhaust gas train (3) at least one pressure source and/or a pressure storage unit for blowing out the condensed water from the exhaust gas drying device (7) and/or for blowing out combustion exhaust gases containing steam from the exhaust gas cleaning device (6) is provided.

## Revendications

1. Installation d'échappement (1) pour un moteur à combustion interne (2), en particulier sur un véhicule automobile, comprenant
- un tronçon d'échappement (3) pour l'évacuation de gaz brûlés du moteur à combustion interne (2), qui présente une première conduite d'échappement (4) et une seconde conduite d'échappement (5),
- un dispositif de nettoyage des gaz brûlés (6) étant disposé dans la première conduite d'échappement (4),
- un dispositif de séchage des gaz brûlés (7) étant disposé dans la seconde conduite d'échappement (5),
- le dispositif de séchage des gaz brûlés (7) comprenant un condensateur,
- au moins un dispositif répartiteur (8) étant disposé dans le tronçon d'échappement (3) pour la répartition des gaz brûlés de combustion entre la première et/ou la seconde conduite d'échappement (4, 5),
**caractérisée en ce que**
- le dispositif de séchage des gaz brûlés (7) est disposé sensiblement coaxialement au dispositif de nettoyage des gaz brûlés (6) et est couplé avec celui-ci en transmettant la chaleur,
- **en ce que** le dispositif de séchage des gaz brûlés (7) est raccordé à un circuit de refroidissement (10).

2. Installation d'échappement selon le préambule de la revendication 1,
**caractérisée en ce que**
une évacuation de condensat (12) d'un condensateur du dispositif de séchage des gaz brûlés (7) est amortie au niveau du bruit.

3. Installation d'échappement selon la revendication 1 ou 2,
**caractérisée en ce que**
le dispositif de séchage des gaz brûlés (7) comprend un matériau absorbeur à effet déshydratant et regénérable.

4. Installation d'échappement selon l'une quelconque des revendications 1 à 3,
**caractérisée en ce que**
le dispositif de nettoyage des gaz brûlés (6) comprend un catalyseur et/ou un filtre à particules.

5. Installation d'échappement selon l'une quelconque des revendications 1 à 4,
**caractérisée en ce que**
- le dispositif répartiteur (8) comporte dans chaque conduite d'échappement (4, 5) une vanne d'arrêt (9) ou un clapet (9') ou
- **en ce que** le dispositif répartiteur (8) comporte une vanne à 3 voies (9"), à laquelle sont raccordées côté entrée ou sortie les deux conduites d'échappement (4, 5).

6. Installation d'échappement selon l'une quelconque des revendications 1 à 5,
**caractérisée en ce que**
la seconde conduite d'échappement (5) débouche en aval ou en amont du dispositif de nettoyage des gaz brûlés (6) dans la première conduite d'échappement (4).

7. Installation d'échappement selon la revendication 6,
**caractérisée en ce que**
dans le cas où la seconde conduite d'échappement (5) débouche en amont du dispositif de nettoyage des gaz brûlés (6) dans la première conduite d'échappement (4), il est prévu un dispositif régulateur/de commande qui régule/commande le dispositif répartiteur (8) et/ou le dispositif de séchage des gaz brûlés (7) de telle sorte qu'une température minimale, indispensable pour le fonctionnement du dispositif de nettoyage des gaz brûlés (6), des gaz brûlés de combustion est garantie.

8. Installation d'échappement selon l'une quelconque des revendications 1 à 7,
**caractérisée en ce que**
au moins un capteur de température pour l'enregistrement de température des gaz brûlés est disposé dans le tronçon d'échappement (3).

9. Installation d'échappement selon l'une quelconque des revendications 1 à 8,
**caractérisée en ce que**
le dispositif de séchage des gaz brûlés (7) présente un séparateur à cyclone.

10. Installation d'échappement selon l'une quelconque des revendications 1 à 9,
**caractérisée en ce que**
le circuit de refroidissement (10) du dispositif de séchage des gaz brûlés (7) est intégré dans au moins l'un des circuits de refroidissement suivants : circuit de refroidissement du moteur à combustion interne (2), circuit de refroidissement d'huile moteur, circuit de refroidissement d'huile de boîte de vitesses, circuit de refroidissement d'air, circuit de refroidissement d'une l'installation d'échappement.

11. Installation d'échappement selon l'une quelconque des revendications 1 à 10,
**caractérisée en ce que**
le dispositif répartiteur (8) est conçu de telle sorte qu'il amène les gaz de combustion en fonction d'une zone caractéristique à la première conduite d'échappement (4) et/ou à la seconde conduite d'échappement (5).

12. Installation d'échappement selon la revendication 11,
**caractérisée en ce que**
la zone caractéristique tient compte d'au moins l'un des paramètres suivants : température du réfrigérant d'un circuit de refroidissement (10), température extérieure et temps de marche du moteur à combustion interne (2).

13. Installation d'échappement selon l'une quelconque des revendications 1 à 12,
**caractérisée en ce que**
au moins une source de pression et/ou un accumulateur de pression est prévu dans le tronçon d'échappement (3) pour l'éjection de l'eau condensée hors du dispositif de séchage des gaz brûlés (7) et/ou pour l'éjection de gaz brûlés de combustion contenant de la vapeur d'eau hors du dispositif de nettoyage des gaz brûlés (6).
